Europäisches Patentamt

European Patent Office

Office européen des brevets

(11) Veröffentlichungsnummer: **0 225 510 B1**

(12) **EUROPÄISCHE PATENTSCHRIFT**

(45) Veröffentlichungstag der Patentschrift: **20.03.91**

(51) Int. Cl.⁵: **C08K 5/13, C08L 57/06**

(21) Anmeldenummer: **86115948.1**

(22) Anmeldetag: **18.11.86**

(54) **Als Stabilisator für Polymere geeignete Mischungen.**

(30) Priorität: **30.11.85 DE 3542468**

(43) Veröffentlichungstag der Anmeldung:
**16.06.87 Patentblatt 87/25**

(45) Bekanntmachung des Hinweises auf die
Patenterteilung:
**20.03.91 Patentblatt 91/12**

(84) Benannte Vertragsstaaten:
**BE CH DE ES FR GB IT LI NL**

(56) Entgegenhaltungen:
EP-A- 0 196 423
BE-A- 652 122
GB-A- 961 797

CHEMICAL ABSTRACTS, Band 86, Nr. 12,
1977, Seite 76, Zusammenfassung Nr.
74187p, Columbus, Ohio, US; E.G. LAZARY-
ANTS et al.: "Polymer composition, containing a carbo-chain rubber and stabilizing
additive from a 15-1:1 mixture of sulfur-
containing antioxidant and an amine- or
phenol-type antioxidant", & Otkrytiya, Izobret., Prom. Obraztsy, Tovarnye Znaki 1976,
53(42), 65

(73) Patentinhaber: **BAYER AG**

**W-5090 Leverkusen 1 Bayerwerk(DE)**

(72) Erfinder: **Eichenauer, Herbert, Dr.**
**Goethestrasse 71**
**W-4047 Dormagen(DE)**
Erfinder: **Pischtschan, Alfred, Dr.**
**Zur Eiche 33**
**W-5067 Kürten-Eichhof(DE)**
Erfinder: **Ott, Karl-Heinz, Dr.**
**Paul-Klee-Strasse 54**
**W-5090 Leverkusen 1(DE)**

EP 0 225 510 B1

**Beschreibung**

Gegenstand der Erfindung sind synergistisch stabilisierend wirkende Mischungen aus phenolischen Antioxidantien und schwefelhaltigen Polymerisaten mit terminalen Thioalkylgruppen, die eine Grenzviskosität von 2 - 15 ml/g (gemessen in Dimethylformamid bei 25° C) und einen Schwefelgehalt von 1,15 bis 3,95 Gewichtsprozent aufweisen.

Synthetische Polymere, insbesondere solche mit ungesättigten Bindungen in der Molekülkette, werden bei der Einwirkung von Sauerstoff, Hitze oder Licht abgebaut, wodurch sich die Eigenschaften verschlechtern und Probleme beim praktischen Einsatz der aus den Polymeren hergestellten Formkörper entstehen.

Zur Verhinderung des Abbaus wurden bereits zahlreiche Stabilisatoren für Polymere beschrieben, auch Kombinationen aus sterisch gehinderten Phenolen und schwefelhaltigen Synergisten. (vgl. US-PS 4.321.191 und die dort zitierte Literatur).

Es wurde gefunden, daß synergistisch wirkende Mischungen aus phenolischen Antioxidantien und schwefelhaltigen Polymerisaten mit terminalen Thioalkylgruppen, die eine Grenzviskosität von 2 - 15 ml/g (gemessen in Dimethylformamid bei 25° C) und einen Schwefelgehalt von 1,15 -3,95 Gew.-% besitzen, Stabilisatoren für Polymere mit besonders guter Wirksamkeit, geringer Flüchtigkeit, guter Verträglichkeit mit den Polymeren und hoher Stabilität gegen Verseifung darstellen.

Gegenstand der Erfindung sind Mischungen aus

A) 1 - 99 Gew.-Teilen, bevorzugt 10 - 90 Gew.-Teilen und besonders bevorzugt 20 - 80 Gew.-Teilen eines schwefelhaltigen Polymerisats aus Styrol, α-Methylstyrol, p-Methylstyrol, Vinyltoluol, Acrylnitril, Methylmethacrylat oder Mischungen daraus mit einer Grenzviskosität von 2 - 15 ml/g, vorzugsweise von 3 -12 ml/g (gemessen in Dimethylformamid bei 25° C) und einem Schwefelgehalt von 1,15 - 3,95 Gew.-%, vorzugsweise von 1,25 - 2,40 Gew.-%, wobei mindestens 90 Gew.-% des eingebauten Schwefels als Bestandteil terminaler $C_{1-18}$-Thioalkylgruppen vorliegt,

B) 99 - 1 Gew.-Teilen, bevorzugt 90 - 10 Gew.-Teilen und besonders bevorzugt 80 - 20 Gew.-Teilen eines phenolischen Antioxidants,

C) 0 - 50 Gew.-Teilen, bevorzugt 0 - 45 Gew.-Teilen und besonders bevorzugt 0 - 40 Gew.-Teilen einer phosphorhaltigen stabilisierend wirkenden Verbindung und

D) 0 - 50 Gew.-Teilen, bevorzugt 0 - 45 Gew.-Teilen, und besonders bevorzugt 0 - 40 Gew.-Teilen einer stickstoffhaltigen stabilisierend wirkenden Verbindung.

Schwefelhaltige Polymerisate A im Sinne der Erfindung sind insbesondere Co- oder Terpolymerisate des (gegebenenfalls kern- oder seitenkettensubstituierten) Styrols. Diese Polymerisate können durch Lösungs-, Suspensions- oder Emulsionspolymerisation oder durch Kombination dieser Verfahren in an sich bekannter Weise hergestellt werden. Bevorzugt ist die Emulsionspolymerisation unter Verwendung anionischer Emulgatoren wie Natrium-, Kalium- oder Ammoniumsalzen langkettiger Fettsäuren mit 10 - 20 C-Atomen, z.B. Kaliumoleat, Alkylsufate mit 10 - 20 C-Atomen, Alkylarylsulfonaten mit 10 - 20 C-Atomen oder Alkali- bzw. Ammoniumsalzen der disproportionierten Abietinsäure.

Die Polymerisation kann vorzugsweise bei 30 bis 100° C, besonders bevorzugt bei 50 bis 80° C ausgeführt werden.

Geeignete radikalbildende Initiatoren sind organische und anorganische Peroxide, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid, und einem Reduktionsmittel bestehen. Als bevorzugter Initiator wird Kaliumpersulfat eingesetzt. Die Katalvsatoren können in Mengen von 0,1 bis 1,0 Gew.-% (bezogen auf die Monomermenge) verwendet werden.

Die terminalen Thioalkylgruppen können durch Polymerisation eines Gemisches aus Monomeren und $C_{1-18}$-Alkylmercaptan eingeführt werden, wobei das als Kettenüberträger wirkende Mercaptan als endständige Thioalkylgruppe eingebaut wird.

Dabei muß der durch die endständigen Thioalkylgruppen eingebrachte Schwefelgehalt mindestens 90 Gew.-% des im Polymerisat insgesamt vorhandenen Schwefels betragen. Der Gehalt an aus anderen Quellen in dem Polymeren vorhandenem Schwefel, (beispielsweise durch Einbau von Initiatorbruchstücken oder durch Pfropfpolymerisaten von schwefelhaltigen Emulgatoren), beträgt weniger als 10 Gew.-% des Gesamtschwefelgehalts im Polymerisat.

Beispiel für einsetyzbare $C_{1-18}$-Alkylmercaptane sind Ethyl-, n-Propyl-, n-Butyl-, t-Butyl-, n-Pentyl-, n-Hexyl-, n-Octyl-, n-Decyl-, n-Dodecyl-, t-Dodecyl-, n-Hexadecyl- und n-Octadecylmercaptan. Bevorzugte Alkylmercaptane sind t-Dodecylmercaptan und n-Dodecylmercaptan bzw. deren Gemische.

Phenolische Antioxidantien B im Sinne der Erfindung sind Verbindungen, die mindestens eine sterisch gehinderte phenolische Gruppierung enthalten.

Beispiele für solche Verbindungen sind

2

2,6-Di-t-butyl-4-methylphenol, 2,4,6-Tri-t-butylphenol, 2,2′-Methylen-bis-(4-methyl-6-t-butylphenol), 2,2′-Thio-bis-(4-methyl-6-t-butylphenol), 4,4′-Thio-bis-(3-methyl-6-t-butylphenol), 4,4′-Butyliden-bis-(6-t-butyl-3-methylphenol), 4,4′-Methylen-bis-(2,6-di-t-butylphenol), 2,2′-Methylen-bis-[4-methyl-6-(1-methylcyclohexyl)-phenol], Tetrakis [methylen-3-(3,5-di-t-butyl-4-hydroxyphenyl)propionat]methan, 1,3,5-Trimethyl-2,4,6-tris-(3,5-di-t-butyl-4-hydroxybenzyl)benzol, N,N′-Hexamethylenbis(3,5-di-t-butyl-4-hydroxy-hydrozimtsäureamid), Octadecyl-3-(3,5-di-t-butyl-4-hydroxyphenyl)propionat, 1,3,5-Tris (3,5-di-t-butyl-4-hydroxybenzyl)isocyanurat, 1,1,3-Tris (5-t-butyl-4-hydroxy-2-methylphenyl)butan, 1,3,5-Tris(3,5-di-t-butyl-4-hydroxybenzyl)mesitylen, Ethylenglykol-bis[3,3-bis(3′-t-butyl-4′-hydroxyphenyl)butyrat], 2,2′-Thiodiethyl-bis-3-(3,5-di-t-butyl-4-hydroxyphenyl)-propionat, Di-(3-t-butyl-4′-hydroxy-5-methylphenyl)dicyclopentadien, 2,2′-Methylen-bis-(4-methyl-6-cyclohexylphenol), 1,6-Hexandiol-bis-3-(3,5-di-t-butyl-4-hydroxyphenyl)propionat, 2,4-Bis(n-octylthio)-6-(4-hydroxy-3,5-di-t-butylanilino)-1,3,5-triazin, 3,5-Di-t-butyl-4-hydroxybenzyl-phosphcnsäurediethylester, Triethylenglykolbis-3-(t-butyl-4-hydroxy-5-methylphenyl)propionat.

Die erfindungsgemäßen Mischungen können außerdem phosphorhaltige Stabilisatoren C wie z.B. Distearylpentaerythritdiphosphit, Tris-(nonylphenyl)-phosphit, Tetrakis-(2,4-di-t-butylphenyl-4,4′-biphenylylendiphosphonit, Tris-(2,4-di-t-butylphenyl)phosphit, Neopentylglykoltriethylenglykoldiphosphit, Diisodecylpentaerythritdiphosphit, Tristearylphosphit, Trilaurylphosphit, Triphenylphosphit und/oder stickstoffhaltige Stabilisatoren D, vorzugsweise aromatische Amine wie z.B. 4,4′-Di-t-octyldiphenylamin, 4,4′-Di-(α,α-dimethylbenzyl)-diphenylamin, Phenyl-β-naphthylamin, N-Isopropyl-N′-phenyl-p-phenylendiamin, N-Phenyl-2-naphthylamin, Phenyl-2-aminonaphthalin enthalten.

Bevorzugte schwefelhaltige Polymerisate A können durch Polymerisation eines Gemisches aus

a) 50 - 80 Gew.-Teilen, vorzugsweise 55 - 75 Gew.-Teilen Styrol, α-Methylstyrol, p-Methylstyrol, Vinyltoluol oder Mischungen daraus,

b) 10 - 33 Gew.-Teilen, vorzugsweise 15 - 30 Gew.-Teilen Acrlynitril, Meth Acrylnitril oder Mischungen daraus und

c) 7,5 - 25 Gew.-Teilen, vorzugsweise 8 - 15 Gew.-Teilen t-Dodecylmercaptan, n-Dodecylmercaptan oder deren Gemischen oder aus

a′) 25 - 75 Gew.-Teilen, vorzugsweise 30 bis 70 Gew.-Teilen Styrol, α-Methylstyrol, p-Methylstyrol, Vinyltoluol oder Mischungen daraus

b′) 25 - 75 Gew.-Teilen, vorzugsweise 30 bis 70 Gew.-Teilen Methylmethacrylat und

c′) 7,5 - 25 Gew.-Teilen, vorzugsweise 8 bis 15 Gew.-Teilen t-Dodecylmercaptan, n-Dodecylmercaptan oder deren Gemischen oder aus

a″) 10 - 60 Gew.-Teilen, vorzugsweise 20 bis 50 Gew.-Teilen Styrol, α-Methylstyrol, p-Methylstyrol, Vinyltoluol, oder Mischungen daraus

b″) 10 - 60 Gew.-Teilen, vorzugsweise 20 - 50 Gew.-Teilen Methylmethacrylat,

c″) 10 - 30 Gew.-Teilen, vorzugsweise 5 - 27,5 Gew.-Teilen Acrylnitril, Meth Acrylnitril oder Mischungen daraus und

d″) 7,5 - 25 Gew.-Teilen, vorzugsweise 8 - 15 Gew.-Teilen t-Dodecylmercaptan, n-Dodecylmercaptan oder deren Gemische oder aus

a‴) 50 - 80 Gew.-Teilen, vorzugsweise 55 - 75 Gew.-Teilen Methylmethacrylat

b‴) 10 - 30 Gew.-Teilen Acrylnitril, Meth-Acrylnitril oder Gemischen daraus und

c‴) 7,5 - 25 Gew.-Teilen, vorzugsweise 8 - 15 Gew.-Teilen t-Dodecylmercaptan, n-Dodecylmercaptan oder deren Gemische

erhalten werden.

Bevorzugte phenolische Antioxidantien B sind

2,6-Di-t-butyl-4-methylphenol, Octadecyl-3-(3,5-di-t-butyl-4-hydroxyphenyl)-propionat, Triethylenglykolbis-3-(t-butyl-4-hydroxy-5-methylphenyl)propionat, 1,6-Hexandiol-bis-3-(3,5-di-t-butyl-4-hydroxyphenyl)-propionat, 2,4-Bis-(n-octylthio)-6-(4-hydroxy-3,5-di-t-butylanilino)-1,3,5-triazin, Tetrakis[methylen-3-(3,5-di-t-butyl-4-hydroxyphenyl)propionat]methan, 2,2′-Thiodiethyl-bis-[3-(3,5-di-t-butyl-4-hydroxyphenyl)-propionat], 2,2′-Methylen-bis-(4-methyl-6-cyclohexylphenol), N,N′-Hexamethylen-bis-(3,5-di-t-butyl-4-hydroxy-hydrozimtsäureamid)bzw. Mischungen daraus.

Bevorzugte phosphorhaltige stabilisierend wirkende Verbindungen sind Trisnonylphenylphosphit und Bisstearylpentarerythritdiphosphit.

Bevorzugt stickstoffhaltige stabilisierend wirkende Verbindungen sind solche, die sich von Diphenylamin ableiten.

Besonders bevorzugte stabilisierende Zusammensetzungen sind solche aus

A) 20 - 80 Gew.-% eines Polymerisats, das durch radikalische Umsetzung von 55 - 75 Gew.-Teilen Styrol, α-Methylstyrol oder Gemischen, 15 - 30 Gew.-Teilen Acrylnitril, Meth-Acrylnitril oder Gemischen und 8 -15 Gew.-Teilen t-Dodecylmercaptan hergestellt wurde und

B) 80 - 20 Gew.-% eines phenolischen Antioxidants, ausgewählt aus den Verbindungen 2,6-Di-t-butyl-4-methylphenol, Octadecyl-3-(3,5-di-t-butyl-4-hydroxyphenyl)propionat, Triethylenglykol-bis-3-(t-butyl-4-hydroxy-5-methylphenyl)propionat, Tetrakis[methylen-3-(3,5-di-t-butyl-4-hydroxyphenyl)propionat]methan, 2,2'-Methylen-bis(4-methyl-6-cyclohexylphenol) oder Mischungen daraus.

Die erfindungsgemäßen synergistisch wirkenden Mischungen eignen sich als Mittel zur Stabilisierung von Polymeren gegen oxidativen Abbau bzw. sonstige durch Sauerstoffeinwirkung hervorgerufene Veränderungen.

Polymere, die durch Zusatz der erfindungsgemäßen Mischungen stabilisiert werden können, sind z.B. Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, schlagzähes Polystyrol (HIPS), Polymethylmethacrylat, Polycarbonat, Polycarbonat/ABS-Gemische, Polyphenylenoxid, Polyphenylenoxid/HIPS-Gemische, Polyamide, z.B. Polyamid-6, Polyamid-66, Polyamid-12, Polyester, z.B. Polyethylenterephthalat, Polybutylenterephthalat, Polyolefine, z.B. Polyethylen, Polypropylen, Polyacetale, Polyurethane, Polybutadien, Styrol/Butadien-Kautschuke, Acrylnitril/Butadien-Kautschuke, Polychloropren, Polyisopren, Butylkautschuk, Ethylen/Propylen/Dien-(EPDM)-Kautschuke, Acrylatkautschuke, Ethylen/Vinylacetat-Kautschuke, Vinylpyridin/Butadien-Kautschuke, Vinylpyridin/Styrol/Butadien-Kautschuke, Vinylpyridin/Acrylnitril/Butadien-Kautschuke, carboxylierte Kautschuke, Polyisobutylen.

Besonders gute Wirksamkeit zeigen die erfindungsgemäßen Mischungen bei der Stabilisierung von ABS-Polymerisaten, MBS-Polymerisaten, Styrol/Acrylnitril-Copolymerisaten, α-Methylstyrol/Acrylnitril-Copolymerisaten, schlagzähem Polystyrol, Polyolefinen und Kautschukpolymeren.

Die zur Stabilisierung verwendeten Mengen der erfindungsgemäßen Mischungen sind 0,1 - 15 Gew.-Teile, bevorzugt 0,5 - 12 Gew.-Teile und besonders bevorzugt 1 -10 Gew.-Teile pro 100 Gew.-Teile zu stabilisierendes Polymer.

Dabei kann die Stabilisatorzusammensetzung in fester Form, als Lösung oder in Form einer Dispersion oder einer Emulsion zu dem Polymermaterial zugegeben werden. Es ist auch möglich, die Bestandteile der Mischung in verschiedenen Formen dem Polymeren zuzusetzen. Je nach Zustand des zu stabilisierenden Polymeren arbeitet man auf Knetern, Walzen, in Emulsion oder in Lösung.

Ein weiterer Gegenstand der Erfindung sind stabilisierte polymere Formmassen, dadurch gekennzeichnet, daß sie 0,1 -15 Gew.-Teile, bevorzugt 0,5 - 12 Gew.-Teile und besonders bevorzugt 1 - 10 Gew.-Teile pro 100 Gew.-Teile Polymer der erfindungsgemäßen Mischung aus schwefelhaltigem Polymerisat und phenolischem Antioxidants enthalten.

Beispiele und Vergleichsbeispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Alle DSC-Messungen wurden unter Verwendung eines DSC-2-Meßgerätes der Firma Perkin Elmer durchgeführt (Spülgas Sauerstoff 3,6 l/h, Heizrate bei dynamischer Messung 20 K/min). Bei der Durchführung der nachstehend beschriebenen Versuche wurden folgende Substanzen eingesetzt:

A: Ein schwefelhaltiges Polymerisat aus Styrol, Acrylnitril und t-Dodecylmercaptan, das wie folgt hergestellt wird:

3,06 Teile Styrol, 1,19 Teile Acrylnitril und 0,75 Teile t-Dodecylmercaptan werden unter Stickstoff zusammen mit 0,08 Teilen des Natriumsalzes der disproportionierten Abietinsäure in 68 Teilen Wasser emulgiert, wonach 0,3 Teile Kaliumpersulfat (gelöst in 24 Teilen Wasser) zugegeben werden und die Mischung auf 65°C erwärmt wird. Danach werden im Laufe von 4 h eine Mischung aus 58,14 Teilen Styrol, 22,61 Teilen Acrylnitril und 14,25 Teilen t-Dodecylmercaptan sowie eine Lösung von 1,92 Teilen des Natriumsalzes der disproportionierten Abietinsäure in 25 Teilen Wasser zudosiert, wobei die Reaktionstemperatur von 65° C beibehalten wird. Nach einer Nachreaktionszeit von 4 Stunden wird ein Teil des Latex in einer kalten Magnesiumsulfat/ Essigsäure-Lösung koaguliert. Das nach Trocknung bei 70° C im Vakuum erhaltene Polymerisat besitzt einen Schwefelgehalt von 2,3 % und eine Grenzviskosität von 6,7 ml/g (in Dimethylformamid bei 25° C).

B: 2,6-Di-t-butyl-4-methylphenol

C: Triethylenglykol-bis-3-(t-butyl-4-hydroxy-5-methylphenyl)propionat (Irganox® 245 der Ciba-Geigy)

D: Tetrakis[methylen-3-(3,5-di-t-butyl-4-hydroxyphenyl)propionat]methan (Irganox® 1010 der Ciba Geigy)

E: Octadecyl-3-(3,5-di-t-butyl-4-hydroxyphenyl)-propionat (Irganox® 1076 der Ciba Geigy)

F: 2,2'-Methylen-bis(4-methyl-6-cyclohexylphenol)

G: Dilaurylthiodipropionat (Irganox® PS 800 der Ciba-Geigy)

Die in Tabelle 1 aufgeführten Polymeren wurden unter Verwendung der angegebenen Stabilisatoren stabilisiert, die resultierende Stabilität wurde über DSC-Messungen ermittelt.

Tabelle 1: Beispiele und Vergleichsbeispiele (vgl. Erläuterungen auf S. 15)

| Beispiel Nr. | Polymer | Stabilisator | Einarbeitung des Stabilisators | Thermostabilität bei DSC-Messungen $T_m$ [$^oC$] |
|---|---|---|---|---|
| 1(e) | (I) | 3A+1C | wäßrige Emulsion | 225 |
| 2(V) | " | – | – | 201 |
| 3(V) | " | 3A | wäßrige Emulsion | 211 |
| 4(V) | " | 1C | " " | 221 |
| 5(e) | (II) | 3A+1E | wäßrige Emulsion | 240 |
| 6(V) | " | – | – | 192 |
| 7(V) | " | 3A | wäßrige Emulsion | 198 |
| 8(V) | " | 1E | " " | 231 |
| 9(e) | (III) | 3A+1B | wäßrige Emulsion | 240 |
| 10(V) | " | – | – – | 228 |
| 11(V) | " | 3A | wäßrige Emulsion | 236 |
| 12(V) | " | 1B | " " | 228 |

EP 0 225 510 B1

EP 0 225 510 B1

Tabelle 1: (Fortsetzung) Beispiele und Vergleichsbeispiele

| Beispiel Nr. | Polymer | Stabilisator | Einarbeitung des Stabilisators | Thermostabilität bei DSC-Messungen $T_i$ [$^0$C] |
|---|---|---|---|---|
| 13(e) | (IV) | 3A+1D | wäßrige Emulsion | 281 |
| 14(V) | " | - | -    - | 252 |
| 15(V) | " | 3A | wäßrige Emulsion | 258 |
| 16(V) | " | 1D | "    " | 260 |
| 17(e) | (V) | 3A+1E | Methylenchlorid-Lösung | 274 |
| 18(V) | " | - | -    - | 247 |
| 19(V) | " | 3A | Methylenchlorid-Lösung | 254 |
| 20(V) | " | 1E | "    " | 259 |

Erläuterungen zur Tabelle 1

Beispiele:

(e):   erfindungsgemäß
(V):   Vergleich

Thermostabilität bei DSC-Messungen

$T_m$:   Maximum der exothermen Reaktion bei dynamischer Messung

Verwendete Polymere:

(I):   Pfropfpolymer von 36 Gew.-Tl. Styrol und 14 Gew.-Tl. Acrylnitril auf 50 Gew.-Tl. Polybutadien
(II):   Polybutadien
(III):   Butadien/Acrylnitril - 68:32 - Copolymerisat
(IV):   Styrol/Acrylnitril - 72:28 - Copolymerisat
(V):   Polystyrol

Beispiel 21 (erfindungsgemäß)

400 g eines Pfropfpolymerisats von 36 Gew.-Teilen Styrol und 14 Gew.-Teilen Acrylnitril auf 50 Gew.-Teile Polybutadien, das in wäßriger Emulsion mit einem Gemisch aus 3A + 0,6B + 0,15F (Gew.-Tle. pro 100 Gew.-Teile Polymer) stabilisiert worden war, wurden bei einer Temperatur von 140° C in Gegenwart von Luftsauerstoff gelagert. Der Beginn einer exothermen Reaktion wurde nach einer Lagerzeit von 65 Stunden festgestellt.

Beispiel 22 (Vergleich)

Der in Beispiel 21 beschriebene Versuch wurde wiederholt, wobei das Pfropfpolymerisat vorher mit einem Gemisch aus 1,05G + 0,68B + 0,15F stabilisert worden war. Der Beginn der exothermen Reaktion erfolgte unter identischen Lagerungsbedingungen nach 18 Stunden.

Aus den Beispielen ist ersichtlich, daß die Verwendung der erfindungsgemäßen Stabilisator zu deutlich besseren Oxidationsstabilitäten der damit ausgerüsteten Polymeren führt.

## Ansprüche

1.   Mischung aus
     A) 1 - 99 Gew.-Teilen eines schwefelhaltigen Polymerisats aus Styrol, $\alpha$-Methylstyrol, p-Methylstyrol, Vinyltoluol, Acrylnitril, Methylmethacrylat oder Mischungen daraus mit einer Grenzviskosität von 2 - 15 ml/g (gemessen in Dimethylformamid bei 25° C) und einem Schwefelgehalt von 1,15 -3,95 Gew.-%, wobei mindestens 90 Gew.-% des eingebauten Schwefels als Bestandteil terminaler $C_{1-18}$-Thioalkyl-Gruppen vorliegt,
     B) 99 - 1 Gew.-Teilen eines phenolischen Antioxidants.

2.   Mischung nach Anspruch 1, enthaltend zusätzlich
     C) 0 - 50 Gew.-Teile einer phosphorhaltigen stabilisierend wirkenden Verbindung und
     D) 0 - 50 Gew.-Teile einer stickstoffhaltigen stabilisierend wirkenden Verbindung.

3.   Mischung nach Ansprüchen 1 und 2, enthaltend als Komponente A ein Polymerisat hergestellt durch Polymerisation eines Gemisches aus

a) 50 - 80 Gew.-Teilen, Styrol, α-Methyl-Styrol, p-Methylstyrol, Vinyltoluol oder Mischungen daraus,

b) 10 - 33 Gew.-Teilen, Acrylnitril, Meth-Acrylnitril oder Mischungen und

c) einer Menge eines oder mehrerer $C_{1-18}$-Alkylmercaptane die einen Schwefelgehalt von 1,15 -3,95 Gew.-% im Polymerisat hervorrufen.

4.  Mischung nach Ansprüchen 1 und 2, enthaltend als Komponente A ein Polymerisat hergestellt durch Polymerisation eines Gemisches aus

a) 50 - 80 Gew.-Teilen, Styrol, α-Methyl-Styrol, p-Methylstyrol, Vinyltoluol oder Mischungen daraus

b) 10 - 33 Gew.-Teilen, Acrylnitril, Meth-Acrylnitril oder Mischungen daraus und

c) 7,5 - 25 Gew.-Teilen, t-Dodecylmercaptan, n-Dodecylmercaptan oder deren Gemische.

5.  Verwendung der Mischungen gemäß Ansprüchen 1 - 4 zur Stabilisierung von Polymeren.

6.  Polymere Formmassen, enthaltend eine Mischung gemäß Ansprüchen 1 - 4 in Mengen von 0,1 - 15 Gew.-%, bezogen auf das Polymere.

7.  Polymere Formmassen gemäß Anspruch 6, enthaltend ABS-Polymerisate, MBS-Polymerisat, schlagzähes Polystyrol, Polyolefin oder Kautschukpolymere.

## Claims

1.  A mixture of

A) 1 to 99 parts by weight of a sulfur-containing polymer of styrene, α-methyl styrene, p-methyl styrene, vinyl toluene, acrylonitrile, methyl methacrylate or mixtures thereof having an intrinsic viscosity of 2 to 15 ml/g (as measured in dimethyl formamide at 25°C) and a sulfur content of 1.15 to 3.95% by weight, at least 90% by weight of the incorporated sulfur being present as part of terminal $C_{1-18}$ thioalkyl groups,

B) 99 to 1 parts by weight of a phenolic antioxidant.

2.  A mixture as claimed in claim 1 additionally containing

C) 0 to 50 parts by weight of a phosphorus-containing stabilizing compound and

D) 0 to 50 parts by weight of a nitrogen-containing stabilizing compound.

3.  A mixture as claimed in claims 1 and 2 containing as component A) a polymer prepared by polymerization of a mixture of

a) 50 to 80 parts by weight styrene, α-methyl styrene, p-methyl styrene, vinyl toluene or mixtures thereof,

b) 10 to 33 parts by weight acrylonitrile, methacrylonitrile or mixtures thereof and

c) a quantity of one or more $C_{1-18}$ alkyl mercaptans which produces a sulfur content of 1.15 to 3.95% by weight in the polymer.

4.  A mixture as claimed in claims 1 and 2 containing as component A a polymer produced by polymerization of a mixture of

a) 50 to 80 parts by weight styrene, α-methyl styrene, p-methyl styrene, vinyl toluene or mixtures thereof,

b) 10 to 33 parts by weight acrylonitrile, methacrylonitrile or mixtures thereof and

c) 7.5 to 25 parts by weight t-dodceyl mercaptan, n-dodecyl mercaptan or mixtures thereof.

5.  The use of the mixtures claimed in claims 1 to 4 for stabilizing polymers.

6.  Polymeric molding compounds containing the mixture claimed in claims 1 to 4 in quantities of 0.1 to 15% by weight, based on the polymer.

7.  Polymeric molding compounds as claimed in claim 6 containing ABS polymers, MBS polymer, high-impact polystyrene, polyolefin or rubber polymers.

**Revendications**

1. Mélange constitué

   A) de 1 à 99 parties en poids d'un produit, contenant du soufre, de polymérisation de styrène, d'α-méthylstyrène, de pméthylstyrène, de vinyltoluène, d'acrylonitrile, de méthacrylate de méthyle ou de leurs mélanges, ayant une viscosité limite de 2 à 15 ml/g (mesurée dans le diméthylformamide à 25°C) et une teneur en soufre de 1,15 à 3,95% en poids, au moins 90% en poids du soufre incorporé étant présents comme constituants de groupes thioalkyle en $C_1$ à $C_{18}$ terminaux,

   B) de 99 à 1 parties en poids d'un antioxydant phénolique.

2. Mélange suivant la revendication 1, contenant en outre

   C) 0 à 50 parties en poids d'un composé à action stabilisante contenant du phosphore et

   D) 0 à 50 parties en poids d'un composé à action stabilisante contenant de l'azote.

3. Mélange suivant les revendications 1 et 2, contenant comme composant A un polymérisat préparé par polymérisation d'un mélange

   a) de 50 à 80 parties en poids de styrène, d'α-méthylstyrène, de p-méthylstyrène, de vinyltoluène ou de leurs mélanges,

   b) de 10 à 33 parties en poids d'acrylonitrile, de méthacrylonitrile ou de leurs mélanges et

   c) d'une quantité d'un ou plusieurs alkylmercaptans en $C_1$ à $C_{18}$ qui confèrent au polymérisat une teneur en soufre de 1,15 à 3,95% en poids.

4. Mélange suivant les revendications 1 et 2, contenant comme composant A un polymérisat préparé par polymérisation d'un mélange

   a) de 50 à 80 parties en poids de styrène, d'α-méthylstyrène, de p-méthylstyrène, de vinyltoluène ou de leurs mélanges

   b) de 10 à 33 parties en poids d'acrylonitrile, de méthacrylonitrile ou de leurs mélanges et

   c) de 7,5 à 25 parties en poids de tertiododécylmercaptan, de n-dodécylmercaptan ou de leurs mélanges.

5. Utilisation des mélanges suivant les revendications 1 à 4 pour la stabilisation de polymères.

6. Matières à mouler polymériques, contenant un mélange suivant les revendications 1 à 4 en quantités de 0,1 à 15 % en poids, par rapport au polymère.

7. Mélanges à mouler polymériques suivant la revendication 6, contenant des polymérisats ABS, un polymérisat MBS, du polystyrène résistant au choc, une polyoléfine ou des polymères du type caoutchouc.